# EUROPEAN PATENT APPLICATION

(11) **EP 3 357 889 A1**
(43) Date of publication of application: **08.08.2018**
(21) Application number: 16851669.8
(22) Date of filing: 28.09.2016
(51) Int. Cl.: C03C 27/12, B32B 15/082, B60J 1/00

(54) **INTERLAYER FILM FOR LAMINATED GLASS, AND LAMINATED GLASS**

(30) Priority: 28.09.2015 JP 2015189937
(71) Applicant: Sekisui Chemical Co., Ltd., Osaka-shi, Osaka 530-8565 (JP)
(72) Inventor: YOSHIDA, Shougo, Kouka-shi Shiga 528-8585 (JP); YAMAMOTO, Masaki, Kouka-shi Shiga 528-8585 (JP); NAKAYAMA, Kazuhiko, Kouka-shi Shiga 528-8585 (JP); YAMAGUCHI, Kouhei, Kouka-shi Shiga 528-8585 (JP)
(74) Representative: Ter Meer Steinmeister & Partner
(86) International application number: PCT/JP2016/078691
(87) International publication number: WO 2017/057498

(57) **Abstract**

There is provided an interlayer film for laminated glass with which the occurrence of a poor appearance due to white cloudiness in laminated glass can be suppressed even though the interlayer film is provided with a layer containing silver. The interlayer film for laminated glass according to the present invention includes a first layer containing silver and a second layer containing a polyvinyl acetal resin, the second layer is arranged on a first surface side of the first layer, the second layer contains a compound having a group in which a carbon atom, an oxygen atom, or a hydrogen atom is bonded to a nitrogen atom, and the compound having a group in which a carbon atom, an oxygen atom, or a hydrogen atom is bonded to a nitrogen atom is a compound having a piperidine structure or is a hindered amine light stabilizer.

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings, and the like. The laminated glass is produced by sandwiching an interlayer film for laminated glass between a pair of glass plates. Such laminated glass used for the opening part of vehicles and buildings is required to have high heat shielding properties.

The energy amount of an infrared ray with a wavelength of 780 nm or more which is longer than that of visible light is small as compared with an ultraviolet ray. However, the thermal action of infrared rays is large, and when infrared rays are absorbed into a substance, heat is released from the substance. As such, infrared rays are generally called heat rays. Accordingly, in order to enhance the heat shielding properties of laminated glass, it is necessary to sufficiently cut off infrared rays.

As an example of the interlayer film for laminated glass, the following Patent Document 1 discloses an interlayer film provided with two interlayer film layers and a functional plastic film arranged between the two interlayer film layers. The functional plastic film has an infrared ray reflection layer and an infrared ray absorption layer. The infrared ray reflection layer is constituted of a multilayer film in which plural high refractive index oxide films and plural low refractive index oxide films are alternately layered, a multilayer film composed of two kinds of polymer thin films different in refractive index in which plural layers of one polymer thin film and plural layers of the other polymer thin film are alternately layered multilayeredly, or a metal film. When the metal film is used as the infrared ray reflection layer, metals such as gold, silver, copper, and aluminum can be used. The metal film is deposited by a sputtering method or the like.

The following Patent Document 2 discloses an interlayer film having a low tendency to turn yellow, having high transmittance for UV-A rays and visible light, and having low transmittance for UV-B rays. This interlayer film includes a polyvinyl acetal, a plasticizer, and an oxanilide-type compound being a UV absorber. Moreover, Patent Document 1 describes that the interlayer film may include an HAS/HALS/NOR-HALS type non-aromatic light stabilizer.

### Related Art Documents

### Patent Documents

Patent Document 1: WO 2010/098287 A1
Patent Document 2: US 2012/0052310 A1

### SUMMARY OF THE INVENTION

### PROBLEMS TO BE SOLVED BY THE INVENTION

In laminated glass prepared with a conventional interlayer film, when the interlayer film is provided with a layer containing silver, there are cases where a poor appearance due to white cloudiness attributed to silver occurs. This white cloudiness is a phenomenon different from a whitening phenomenon generated at the peripheral edge part of an interlayer film containing no silver component.

An object of the present invention is to provide an interlayer film for laminated glass with which the occurrence of a poor appearance due to white cloudiness in laminated glass can be suppressed even though the interlayer film is provided with a layer containing silver. Moreover, the present invention is also aimed at providing laminated glass prepared with the above-mentioned interlayer film for laminated glass.

### MEANS FOR SOLVING THE PROBLEMS

According to a broad aspect of the present invention, there is provided an interlayer film for laminated glass (hereinafter, sometimes abbreviated as an interlayer film) including a first layer containing silver and a second layer containing a polyvinyl acetal resin, the second layer being arranged on a first surface side of the first layer, the second layer containing a compound having a group in which a carbon atom, an oxygen atom, or a hydrogen atom is bonded to a nitrogen atom, and the compound having a group in which a carbon atom, an oxygen atom, or a hydrogen atom is bonded to a nitrogen atom being a compound having a piperidine structure or being a hindered amine light stabilizer.

In a specific aspect of the interlayer film according to the present invention, the second layer contains an ultraviolet ray screening agent, the ultraviolet ray screening agent in the second layer contains no chlorine atom or contains a chlorine atom, when the ultraviolet ray screening agent in the second layer contains no chlorine atom, the second layer contains no chlorine atom or contains a chlorine atom in a content of 30 ppm or less, and when the ultraviolet ray screening agent in the second layer contains a chlorine atom, the second layer contains no chlorine atom other than the chlorine atom in the ultraviolet ray screening agent or contains 30 ppm or less of chlorine atom(s) other than the chlorine atom in the ultraviolet ray screening agent.

In a specific aspect of the interlayer film according to the present invention, the first layer is provided with a layer body and a film containing silver and the film containing silver is arranged on a first surface side of the layer body.

In a specific aspect of the interlayer film according to the present invention, the film containing silver is arranged on the first surface side of the first layer.

In a specific aspect of the interlayer film according to the present invention, no film containing silver is arranged on a second surface side opposite to the first surface of the layer body.

In a specific aspect of the interlayer film according to the present invention, the interlayer film further includes a third layer containing a polyvinyl acetal resin and the third layer is arranged on a second surface side opposite to the first surface of the first layer.

In a specific aspect of the interlayer film according to the present invention, the second layer contains a plasticizer and the third layer contains a plasticizer.

In a specific aspect of the interlayer film according to the present invention, when the interlayer film is sandwiched between two sheets of green glass with a thickness of 2 mm in accordance with JIS R3208 to obtain laminated glass, the visible light transmittance of the laminated glass is 60% or more.

According to a broad aspect of the present invention, there is provided laminated glass including a first lamination glass member, a second lamination glass member, and the above-described interlayer film for laminated glass, the interlayer film for laminated glass being arranged between the first lamination glass member and the second lamination glass member.

In a specific aspect of the laminated glass according to the present invention, the visible light transmittance is 60% or more.

### EFFECT OF THE INVENTION

Since the interlayer film for laminated glass according to the present invention includes a first layer containing silver and a second layer containing a polyvinyl acetal resin, the second layer is arranged on a first surface side of the first layer, the second layer contains a compound having a group in which a carbon atom, an oxygen atom, or a hydrogen atom is bonded to a nitrogen atom, and the compound having a group in which a carbon atom, an oxygen atom, or a hydrogen atom is bonded to a nitrogen atom is a compound having a piperidine structure or is a hindered amine light stabilizer, the occurrence of a poor appearance due to white cloudiness in laminated glass can be suppressed even though the interlayer film is provided with a layer containing silver.

### BRIEF DESCRIPTION OF DRAWINGS

[Fig. 1] Fig. 1 is a sectional view schematically showing an interlayer film for laminated glass in accordance with one embodiment of the present invention.
[Fig. 2] Fig. 2 is a sectional view schematically showing an example of laminated glass prepared with the interlayer film for laminated glass shown in Fig. 1.

### MODE(S) FOR CARRYING OUT THE INVENTION

Hereinafter, the details of the present invention will be described.

The interlayer film for laminated glass (hereinafter, sometimes abbreviated as the interlayer film) according to the present invention is provided with a first layer containing silver and a second layer containing a polyvinyl acetal resin. In the interlayer film according to the present invention, the second layer is arranged on a first surface side of the first layer. The second layer contains a compound having a group in which a carbon atom, an oxygen atom, or a hydrogen atom is bonded to a nitrogen atom. The compound having a group in which a carbon atom, an oxygen atom, or a hydrogen atom is bonded to a nitrogen atom is a compound having a piperidine structure or is a hindered amine light stabilizer. The compound having a group in which a carbon atom, an oxygen atom, or a hydrogen atom is bonded to a nitrogen atom may be a compound having a piperidine structure and may be a hindered amine light stabilizer.

The interlayer film according to the present invention is provided with a third layer or is provided with no third layer. From the viewpoint of enhancing the adhesivity to a lamination glass member, it is preferred that the interlayer film according to the present invention be provided with a third layer. When the interlayer film according to the present invention is provided with the third layer, it is preferred that the third layer contain a polyvinyl acetal resin. When the interlayer film according to the present invention is provided with the third layer, the third layer is arranged on a second surface side opposite to the first surface of the first layer.

In the present invention, since the interlayer film is provided with the above-described configuration, the occurrence of a poor appearance due to white cloudiness in laminated glass can be suppressed even though the interlayer film is provided with a layer containing silver. At the time of synthesizing a polyvinyl acetal resin, hydrogen chloride or the like as an acid catalyst is sometimes used as the catalyst to perform the acetalization of polyvinyl alcohol. As such, a layer containing a polyvinyl acetal resin is sometimes made to contain a chlorine atom. Moreover, even at a time other than the time of synthesizing a polyvinyl acetal resin, due to an external environment, a layer containing a polyvinyl acetal resin is sometimes made to contain a chlorine atom. When such a layer containing a chlorine atom and a layer containing silver are used, it has been found out that white cloudiness is easily generated. Furthermore, when an interlayer film is provided with a layer containing silver, it has been found out that, by using a compound having a group in which a carbon atom, an oxygen atom, or a hydrogen atom is bonded to a nitrogen atom as one of the components for a layer containing a polyvinyl acetal resin, white cloudiness is significantly suppressed.

Hereinafter, specific embodiments of the present invention will be described with reference to the drawings.

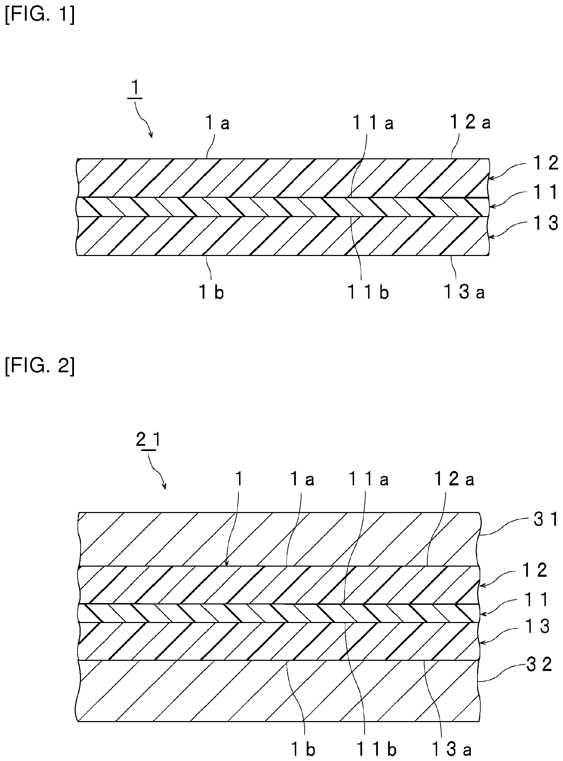

Fig. 1 is a sectional view schematically showing an interlayer film for laminated glass in accordance with one embodiment of the present invention.

An interlayer film 1 shown in Fig. 1 is a multi-layered interlayer film having a two or more-layer structure. The interlayer film 1 is used for obtaining laminated glass. The interlayer film 1 has a two or more-layered structure. The interlayer film 1 is an interlayer film for laminated glass.

The interlayer film 1 is provided with a first layer 11, a second layer 12 arranged on a first surface 11a side of the first layer 11, and a third layer 13 arranged on a second surface 11b side opposite to the first surface 11a of the first layer 11. The second layer 12 is layered on the first surface 11a of the first layer 11. The second layer 12 and the first layer 11 are in contact with each other. The third layer 13 is layered on the second surface 11b of the first layer 11. The first layer 11 and the third layer 13 are in contact with each other. The first layer 11 is an intermediate layer. The first layer 11 contains silver. The second layer 12 and the third layer 13 are surface layers in the present embodiment. The first layer 1 is arranged between the second layer 12 and the third layer 13. The first layer 11 is sandwiched between the second layer 12 and the third layer 13. Accordingly, the interlayer film 1 has a multilayer structure in which the second layer 12, the first layer 11, and the third layer 13 are layered in this order.

In this connection, additional layers may be arranged between the first layer 11 and the second layer 12 and between the first layer 11 and the third layer 13, respectively. It is preferred that each of the second layer 12 and the third layer 13 be directly layered on the first layer 11. Examples of the additional layer include a layer containing a thermoplastic resin such as a polyvinyl acetal resin, a layer containing polyethylene terephthalate, polyethylene naphthalate, and the like, and the like. When these additional layers are included in the interlayer film, only one kind of layer may be included, and two or more different kinds of layers may be included.

The first layer contains silver. The silver component may be silver as a simple substance and may be a silver salt, a silver compound, or a silver alloy. Examples of the silver alloy include a silver/palladium/copper alloy (for example, APC available from Furuya Metal Co., Ltd. and the like) and the like. The silver component may be contained in a surface part of the first layer, may be contained in a middle part thereof, and may be dispersed over the whole first layer to be contained therein.

From the viewpoint of effectively enhancing the heat shielding properties, it is preferred that the first layer be provided with a layer body and a film containing silver. In this case, the film (first film) containing silver is arranged on a first surface side of the layer body. A first film containing silver is arranged on a first surface side of the layer body and a second film containing silver may be arranged on a second surface side opposite to the first surface of the layer body. A film (second film) containing silver may not be arranged on a second surface side opposite to the first surface of the layer body.

The content of silver in the first layer is appropriately adjusted in view of the visible light transmittance of laminated glass and the like.

For example, the film containing silver can be formed on the surface of a layer body by sputtering or the like. Separately, materials for a film containing silver are kneaded together with a material for a first layer, after which the kneaded product can be extruded into a film-like shape to form a film containing silver.

It is preferred that each of the material for the first layer and the material for a layer body be constituted of a resin. Examples of the material for the layer body include a polyethylene terephthalate resin, a polyethylene naphthalate resin, a polyvinyl acetal resin, an ethylene-vinyl acetate copolymer resin, an ethylene-acryl copolymer resin, a polyurethane resin, a polyvinyl alcohol resin, a polyolefin resin, a polyvinyl chloride resin, a polyimide resin, and the like.

It is preferred that the film (first film) containing silver be arranged on a first surface side of the layer body. The second layer may be arranged on a surface of the film containing silver. The film containing silver and the second layer may be in contact with each other.

When the interlayer film is provided with the third layer, the layer body and the third layer may be in contact with each other. The second film containing silver and the third layer may be in contact with each other.

It is preferred that the second layer contain no chlorine atom or have a content of the chlorine atom of 150 ppm or less. From the viewpoint of further suppressing white cloudiness, it is good to make the content of the chlorine atom in the second layer smaller. The content of the chlorine atom in the second layer is more preferably 100 ppm or less, further preferably 50 ppm or less, especially preferably 30 ppm or less, and most preferably 15 ppm or less. On the other hand, when the second layer contains a larger amount of chlorine atoms, an inhibitory effect on white cloudiness exerted by using a compound having a group in which a carbon atom, an oxygen atom, or a hydrogen atom is bonded to a nitrogen atom is further effectively attained. In the present invention, even when the content of chlorine atom(s) other than a chlorine atom in an ultraviolet ray screening agent contained in the second layer is 1 ppm or more, is 5 ppm or more, is 10 ppm or more, and is more than 15 ppm, white cloudiness can be suppressed.

It is preferred that the second layer contain an ultraviolet ray screening agent. It is preferred that the second layer contain no chlorine atom other than a chlorine atom in the ultraviolet ray screening agent or contain 100 ppm or less of chlorine atom(s) other than the chlorine atom in the ultraviolet ray screening agent. That is, it is preferred that, when the ultraviolet ray screening agent in the second layer contains no chlorine atom, the second layer contain no chlorine atom or contain a chlorine atom in a content of 100 ppm or less, and when the ultraviolet ray screening agent in the second layer contains a chlorine atom, the second layer contain no chlorine atom other than the chlorine atom in the ultraviolet ray screening agent or contain 100 ppm or less of chlorine atom(s) other than the chlorine atom in the ultraviolet ray screening agent. In this connection, the ultraviolet ray screening agent may contain a chlorine atom and may contain no chlorine atom. The ultraviolet ray screening agent in the second layer contains no chlorine atom or contains a chlorine atom. When an ultraviolet ray screening agent having a chlorine atom is used, the chlorine atom does not largely affect white cloudiness because the chlorine atom is strongly bonded to the ultraviolet ray screening agent in the chemical structure thereof. From the viewpoint of further suppressing white cloudiness, it is good to make the content of the chlorine atom(s) other than the chlorine atom in the ultraviolet ray screening agent contained in the second layer smaller. The content of the chlorine atom(s) other than the chlorine atom in the ultraviolet ray screening agent contained in the second layer is more preferably 50 ppm or less, further preferably 30 ppm or less, and still further preferably 15 ppm or less. On the other hand, when the second layer contains a larger amount of chlorine atom(s) other than the chlorine atom in the ultraviolet ray screening agent, an inhibitory effect on white cloudiness exerted by using a compound having a group in which a carbon atom, an oxygen atom, or a hydrogen atom is bonded to a nitrogen atom is further effectively attained. In the present invention, even when the content of chlorine atom(s) other than a chlorine atom in an ultraviolet ray screening agent contained in the second layer is 1 ppm or more, is 5 ppm or more, is 10 ppm or more, and is more than 15 ppm, white cloudiness can be suppressed.

Moreover, in the second layer, the content of the chlorine atom contained as elemental chlorine or contained as a chlorine atom in a compound with a molecular weight of 250 or less is preferably 100 ppm or less, more preferably 50 ppm or less, further preferably 30 ppm or less, and still further preferably 15 ppm or less. The content of such a chlorine atom may be 1 ppm or more, may be 5 ppm or more, may be 10 ppm or more, and may be more than 15 ppm.

The content of the chlorine atom in the second layer can be measured with the use of an automatic combustion halogen/sulfur analyzing system ("SQ-1 type/HSU-35 type" available from ANATEC YANACO CORPORATION, "ICS-2000 type" available from Thermo Fisher Scientific K.K.). Moreover, the content of the chlorine atom in each of the first layer other than the second layer and the whole interlayer film can also be measured in the same way.

It is preferred that the first layer contain an ultraviolet ray screening agent. From the viewpoint of further suppressing white cloudiness, it is preferred that, when the ultraviolet ray screening agent in the first layer contains no chlorine atom, the first layer contain no chlorine atom or contain a chlorine atom in a content of 100 ppm or less (more preferably 50 ppm or less, further preferably 30 ppm or less, and still further preferably 15 ppm or less), and when the ultraviolet ray screening agent in the first layer contains a chlorine atom, the first layer contain no chlorine atom other than the chlorine atom in the ultraviolet ray screening agent or contain chlorine atom(s) in a content of 100 ppm or less (more preferably 50 ppm or less, further preferably 30 ppm or less, and still further preferably 15 ppm or less) as chlorine atom(s) other than the chlorine atom in the ultraviolet ray screening agent. The ultraviolet ray screening agent in the first layer contains no chlorine atom or contains a chlorine atom. The content of such a chlorine atom may be 1 ppm or more, may be 5 ppm or more, may be 10 ppm or more, and may be more than 15 ppm.

When the interlayer film is provided with the third layer, it is preferred that the third layer contain an ultraviolet ray screening agent. From the viewpoint of further suppressing white cloudiness, it is preferred that, when the ultraviolet ray screening agent in the third layer contains no chlorine atom, the third layer contain no chlorine atom or contain a chlorine atom in a content of 100 ppm or less (more preferably 50 ppm or less, further preferably 30 ppm or less, and still further preferably 15 ppm or less), and when the ultraviolet ray screening agent in the third layer contains a chlorine atom, the third layer contain no chlorine atom other than the chlorine atom in the ultraviolet ray screening agent or contain chlorine atom(s) in a content of 100 ppm or less (more preferably 50 ppm or less, further preferably 30 ppm or less, and still further preferably 15 ppm or less) as chlorine atom(s) other than the chlorine atom in the ultraviolet ray screening agent. The ultraviolet ray screening agent in the third layer contains no chlorine atom or contains a chlorine atom. The content of such a chlorine atom may be 1 ppm or more, may be 5 ppm or more, may be 10 ppm or more, and may be more than 15 ppm.

In this connection, at the time of producing a polyvinyl acetal resin to be used, the polyvinyl acetal resin can be washed plural times with an excess amount of ion-exchanged water to lower the content of the chlorine atom in the second layer. The amount of ion-exchanged water used or the number of times of washing can be increased to lower the content of the chlorine atom in the second layer.

Moreover, when the first layer and the third layer contain a thermoplastic resin, the thermoplastic resin can be washed plural times with an excess amount of ion-exchanged water to lower the content of the chlorine atom in the respective layers. The amount of ion-exchanged water used or the number of times of washing can be increased to lower the content of the chlorine atom in the first layer and the third layer.

From the viewpoint of effectively enhancing the heat shielding properties and the penetration resistance, the thickness of the first layer is preferably 20 µm or more and more preferably 30 µm or more and is preferably 200 µm or less and more preferably 150 µm or less.

From the viewpoint of effectively enhancing the adhesivity and the penetration resistance, the thickness of each of the second layer and the third layer is preferably 200 µm or more and more preferably 300 µm or more and is preferably 900 µm or less and more preferably 850 µm or less.

The thickness of the interlayer film is not particularly limited. From the viewpoint of the practical aspect and the viewpoint of sufficiently enhancing the heat shielding properties, the thickness of the interlayer film is preferably 0.1 mm or more and more preferably 0.25 mm or more and is preferably 3 mm or less and more preferably 1.5 mm or less. When the thickness of the interlayer film is the above lower limit or more, the penetration resistance of laminated glass is enhanced. When the thickness of the interlayer film is the above upper limit or less, the transparency of the interlayer film is further improved.

From the viewpoint of obtaining laminated glass further excellent in transparency, the visible light transmittance of laminated glass is preferably 60% or more, more preferably 65% or more, and further preferably 70% or more. The visible light transmittance of laminated glass can be measured in accordance with JIS R3211 (1998). The visible light transmittance of laminated glass obtained by sandwiching the interlayer film for laminated glass according to the present invention between two sheets of green glass with a thickness of 2 mm in accordance with JIS R3208 is preferably 60% or more, more preferably 65% or more, and further preferably 70% or more.

A sound-insulating interlayer film that includes a second layer may be arranged on a first surface side of a first layer containing silver. A second layer positioned at a first surface side of a first layer containing silver may be a sound insulating layer and an additional layer positioned at a first surface side of a first layer containing silver may be a sound insulating layer. A sound-insulating interlayer film that includes a third layer may be arranged on a second surface side of a first layer containing silver. A third layer positioned at a second surface side of a first layer containing silver may be a sound insulating layer and an additional layer positioned at a second surface side of a first layer containing silver may be a sound insulating layer. The sound-insulating interlayer film may be a multilayer interlayer film.

Hereinafter, other details of each layer of the interlayer film will be described.

### (Thermoplastic resin)

The first layer may contain a thermoplastic resin. The second layer contains a polyvinyl acetal resin. It is preferred that the third layer contain a thermoplastic resin. As the thermoplastic resin, a conventionally known thermoplastic resin can be used. One kind of the thermoplastic resin may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic resins other than these may be used.

It is preferred that the thermoplastic resin be a polyvinyl acetal resin. By using a polyvinyl acetal resin and a plasticizer together, the adhesive force of the interlayer film according to the present invention to a lamination glass member or another interlayer film is further enhanced.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be produced by saponifying polyvinyl acetate. The saponification degree of the polyvinyl alcohol generally lies within the range of 70 to 99.9% by mole.

The average polymerization degree of the polyvinyl alcohol is preferably 200 or more, more preferably 500 or more, even more preferably 1500 or more, further preferably 1600 or more, especially preferably 2600 or more, most preferably 2700 or more, and preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more, and preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, it is preferred that the content of the hydroxyl group (the amount of hydroxyl groups), the acetalization degree (the butyralization degree), and the acetylation degree be calculated from the results measured by a method in accordance with JIS K6728 "Testing methods for polyvinyl butyral".

### (Plasticizer)

From the viewpoint of further enhancing the adhesive force of an interlayer film, it is preferred that the interlayer film contain a plasticizer, it is preferred that the second layer contain a plasticizer, and it is preferred that the third layer contain a plasticizer. When the thermoplastic resin contained in the respective layers is a polyvinyl acetal resin, it is especially preferred that the respective layers contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

The monobasic organic acid ester is not particularly limited, and examples thereof include a glycol ester obtained by the reaction of a glycol with a monobasic organic acid, an ester of triethylene glycol or tripropylene glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

The polybasic organic acid ester is not particularly limited, and examples thereof include an ester compound of a polybasic organic acid with an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used.

The organic phosphate plasticizer is not particularly limited, and examples thereof include tributoxyethyl phosphate, isodecyl phenyl phosphate, triisopropyl phosphate, and the like.

It is preferred that the plasticizer be a diester plasticizer represented by the following formula (1).

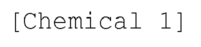

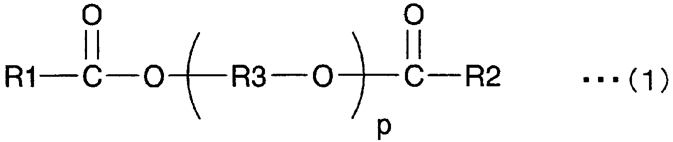

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH) and it is more preferred that the plasticizer include triethylene glycol di-2-ethylhexanoate.

The content of the plasticizer is not particularly limited. In the respective layers, the content of the plasticizer is preferably 25 parts by weight or more and more preferably 30 parts by weight or more and is preferably 100 parts by weight or less, more preferably 60 parts by weight or less, and further preferably 50 parts by weight or less relative to 100 parts by weight of the thermoplastic resin or 100 parts by weight of the polyvinyl acetal resin. When the content of the plasticizer is the above lower limit or more, the penetration resistance of laminated glass is further enhanced. When the content of the plasticizer is the above upper limit or less, the transparency of the interlayer film is further enhanced.

### (Heat shielding compound)

From the viewpoint of further enhancing the heat shielding properties, it is preferred that the interlayer film contain a heat shielding compound, it is preferred that the second layer contain a heat shielding compound, and it is preferred that the third layer contain a heat shielding compound. One kind of the heat shielding compound may be used alone and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

### Ingredient X:

It is preferred that the interlayer film contain at least one kind of Ingredient X among a phthalocyanine compound, a naphthalocyanine compound, and an anthracyanine compound. From the viewpoint of further enhancing the heat shielding properties, it is preferred that the second layer contain the Ingredient X and it is preferred that the third layer contain the Ingredient X. The first layer may contain the heat shielding particles. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer or a third layer), the content of the Ingredient X is preferably 0.001% by weight or more, more preferably 0.005% by weight or more, further preferably 0.01% by weight or more, and especially preferably 0.02% by weight or more and is preferably 0.2% by weight or less, more preferably 0.1% by weight or less, further preferably 0.05% by weight or less, and especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

From the viewpoint of further enhancing the heat shielding properties, it is preferred that the interlayer film contain heat shielding particles, it is preferred that the second layer contain the heat shielding particles, and it is preferred that the third layer contain the heat shielding particles. The first layer may contain the heat shielding particles. The heat shielding particle is of a heat shielding compound. By the use of heat shielding particles, infrared rays (heat rays) can be effectively cut off. One kind of the heat shielding particles may be used alone and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles.
In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs₀.₃₃WO₃.

The average particle diameter of the heat shielding particles is preferably 0.01 µm or more, more preferably 0.02 µm or more, and preferably 0.1 µm or less and more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3% by weight or less. When the content of the heat shielding particles is the above lower limit or more and the above upper limit or less, the heat shielding properties are sufficiently enhanced and the visible light transmittance is sufficiently enhanced.

### (Metal salt)

From the viewpoint of controlling the adhesive force within a satisfactory range, it is preferred that the interlayer film contain at least one kind of metal salt (hereinafter, sometimes described as Metal salt M) among an alkali metal salt, an alkaline earth metal salt, and a magnesium salt. From the viewpoint of controlling the adhesive force within a satisfactory range, it is preferred that the second layer contain the Metal salt M and it is preferred that the third layer contain the Metal salt M. The first layer may contain the Metal salt M. By the use of the Metal salt M, controlling the adhesivity between the interlayer film and a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr, and Ba. It is preferred that the metal salt contained in the interlayer film contain at least one kind of metal between K and Mg.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in a layer containing the Metal salt M (a first layer, a second layer, or a third layer) is preferably 5 ppm or more, more preferably 10 ppm or more, further preferably 20 ppm or more, and preferably 300 ppm or less, more preferably 250 ppm or less, and further preferably 200 ppm or less. When the total of the contents of Mg and K is the above lower limit or more and the above upper limit or less, the adhesivity between the interlayer film and a glass plate or the adhesivity between respective layers in the interlayer film can be further well controlled.

### (Compound having group in which carbon atom, oxygen atom, or hydrogen atom is bonded to nitrogen atom)

The interlayer film contains a compound having a group in which a carbon atom, an oxygen atom, or a hydrogen atom is bonded to a nitrogen atom (hereinafter, sometimes abbreviated as a Compound Y'). In the present invention, the Compound Y' is a compound having a piperidine structure or is a hindered amine light stabilizer. Among the respective kinds of the Compound Y', a Compound Y' being a compound having a piperidine structure or being a hindered amine light stabilizer is sometimes abbreviated as a Compound Y. The first layer may contain the Compound Y. The second layer contains the Compound Y. It is preferred that the third layer contain the Compound Y. One kind of the Compound Y may be used alone, and two or more kinds thereof may be used in combination. When the Compound Y' is a compound having a piperidine structure or when a hindered amine light stabilizer is used as the Compound Y', white cloudiness can be effectively suppressed.

From the viewpoint of effectively suppressing white cloudiness, it is preferred that the Compound Y be a compound having a group in which a carbon atom, an oxygen atom, or a hydrogen atom is bonded to a nitrogen atom of the piperidine structure.

It is preferred that the Compound Y be a compound in which a carbon atom (preferably an alkyl group) is bonded to a nitrogen atom of the piperidine structure, it is also preferred that the Compound Y be a compound in which an oxygen atom (preferably an alkoxy group) is bonded to a nitrogen atom of the piperidine structure, and it is also preferred that the Compound Y be a compound in which a hydrogen atom is bonded to a nitrogen atom of the piperidine structure.

Examples of the compound in which a carbon atom (preferably an alkyl group) is bonded to a nitrogen atom of the piperidine structure include Tinuvin 765, Tinuvin 144, Tinuvin 723, Tinuvin 622SF, ADK STAB LA-52, and the like.

Examples of the compound in which an oxygen atom (preferably an alkoxy group) is bonded to a nitrogen atom of the piperidine structure include Tinuvin NOR371, Tinuvin XT850FF, Tinuvin XT855FF, ADK STAB LA-81, and the like.

Examples of the compound in which a hydrogen atom is bonded to a nitrogen atom of the piperidine structure include Tinuvin 770DF, Hostavin N24, and the like.

From the viewpoint of effectively suppressing white cloudiness, the molecular weight of the Compound Y is preferably 2000 or less, more preferably 1000 or less, and further preferably 700 or less.

From the viewpoint of further suppressing white cloudiness, in 100% by weight of a layer containing the Compound Y (a first layer, a second layer, or a third layer), the content of the Compound Y is preferably 0.003% by weight or more, more preferably 0.01% by weight or more, further preferably 0.015% by weight or more, and especially preferably 0.05% by weight or more and is preferably 0.5% by weight or less and more preferably 0.3% by weight or less.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. One kind of the ultraviolet ray screening agent may be used alone, and two or more kinds thereof may be used in combination. Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

In this connection, in the present invention, a hindered amine light stabilizer is not categorized as the ultraviolet ray screening agent.

From the viewpoint of further suppressing the lowering in visible light transmittance after the lapse of a certain period of time, in 100% by weight of the interlayer film or in 100% by weight of a layer containing the ultraviolet ray screening agent (a first layer, a second layer or a third layer), the content of the ultraviolet ray screening agent is preferably 0.1% by weight or more, more preferably 0.2% by weight or more, further preferably 0.3% by weight or more, and especially preferably 0.5% by weight or more, and is preferably 2.5% by weight or less, more preferably 2% by weight or less, further preferably 1% by weight or less, and especially preferably 0.8% by weight or less. In particular, by setting the content of the ultraviolet ray screening agent to be 0.2% by weight or more in 100% by weight of the interlayer film or in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3, 5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.03% by weight or more and it is more preferred that the content thereof be 0.08% by weight in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the first layer, the second layer, and the third layer may contain additives such as a flame retardant, an antistatic agent, a pigment, a dye, a moisture-resistance improving agent, a fluorescent brightening agent, and an infrared ray absorber, as necessary. One kind of these additives may be used alone and two or more kinds thereof may be used in combination.

### (Laminated glass)

Fig. 2 is a sectional view schematically showing an example of laminated glass prepared with the interlayer film for laminated glass shown in Fig. 1.

The laminated glass 21 shown in Fig. 2 is provided with an interlayer film 1, a first lamination glass member 31, and a second lamination glass member 32. The interlayer film 1 is arranged between the first lamination glass member 31 and the second lamination glass member 32 to be sandwiched therebetween. The first lamination glass member 31 is arranged on a first surface 1a of the interlayer film 1 to be layered thereon. The second lamination glass member 32 is arranged on a second surface 1b opposite to the first surface 1a of the interlayer film 1 to be layered thereon. The first lamination glass member 31 is arranged on an outer surface 12a of a second layer 12 to be layered thereon. The second lamination glass member 32 is arranged on an outer surface 13a of a third layer 13 to be layered thereon.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate and it is preferred that at least one glass plate be used. It is preferred that each of the first lamination glass member and the second lamination glass member be a glass plate or a PET (polyethylene terephthalate) film and the interlayer film include at least one glass plate as the first lamination glass member or the second lamination glass member. It is especially preferred that both of the first lamination glass member and the second lamination glass member be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the sheet of organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and preferably 5 mm or less. When the lamination glass member is a glass plate, the thickness of the glass plate is preferably 1 mm or more and preferably 5 mm or less. When the lamination glass member is a PET film, the thickness of the PET film is preferably 0.03 mm or more and preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag. Therefore, the air remaining between the first lamination glass member and the interlayer film and between the second lamination glass member and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

Hereinafter, the present invention will be described in more detail with reference to examples. The present invention is not limited only to these examples.

As a first layer, the following film was prepared.

XIR (a resin film with metal foil, "XIR-75" available from Southwall Technologies Inc.); specifically, a resin film with metal foil constituted of a layer body including a polyethylene terephthalate-made base material and a multilayer portion being arranged on the layer body and being composed of n layers of films containing silver and n + 1 layers of metal oxide layers which are alternately layered.

The following materials were used to form a second layer and a third layer.

### (Thermoplastic resin)

PVB1 (a polyvinyl acetal resin, n-butyraldehyde which has 4 carbon atoms was used for the acetalization, the average polymerization degree of polyvinyl alcohol of 1700, the content of the hydroxyl group of 30.7% by mole, the acetalization degree of 68.5% by mole, the acetylation degree of 0.8% by mole)

### (Preparation of PVB1)

In a 2-m³ reactor fitted with a stirrer, 1700 kg of a 7.5% by weight aqueous solution of PVA (the polymerization degree of 1700, the saponification degree of 99.2% by mole), 74.6 kg of n-butyraldehyde, and 0.13 kg of 2,6-di-t-butyl-4-methylphenol were placed and the contents were cooled to 14°C. To this, 99.44 L of hydrochloric acid with a concentration of 20% by weight was added to initiate a butyralization reaction of PVA. The temperature rise was started at the end of 10 minutes after the completion of adding, the temperature was made to rise to 65°C over 90 minutes and the reaction was performed for another 120 minutes. Afterward, the contents were cooled to room temperature and a precipitated solid content was filtered off, and then, washed with ion-exchanged water (as an example of the washing operation, a solid content was washed ten times with ion-exchanged water in an amount of 10 times the weight of the solid content) (washing before neutralization). The amount of ion-exchanged water in a washing process for the PVB1 and the number of times of washing were adjusted to regulate the removal ratio of the chlorine atom left behind after the synthesis of the PVB1. Afterward, the solid content was neutralized thoroughly with the use of a 0.3% by weight aqueous sodium bicarbonate solution, dehydrated, and then, dried to obtain a PVB1.

With regard to the polyvinyl acetal resin, the acetalization degree (the butyralization degree), the acetylation degree, and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Plasticizer)

3GO (triethylene glycol di-2-ethylhexanoate)

(Compound Y; a compound having a group in which a carbon atom, an oxygen atom, or a hydrogen atom is bonded to a nitrogen atom and having a piperidine structure or being a hindered amine light stabilizer)

Tinuvin 770DF (available from BASF Japan Ltd., N-H (hydrogen atom) type, the molecular weight of 481)

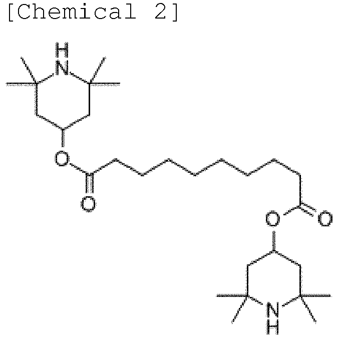

Tinuvin 765 (available from BASF Japan Ltd., N-C (alkyl group) type, the molecular weight of 509)

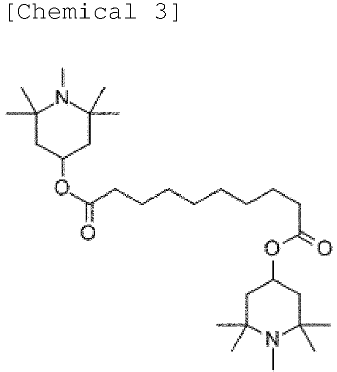

Tinuvin 144 (available from BASF Japan Ltd., N-C (alkyl group) type, the molecular weight of 685)

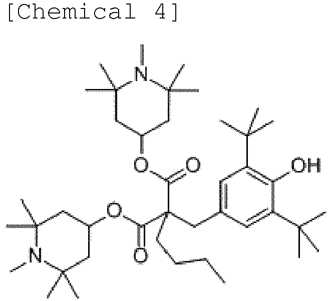

Tinuvin 123 (available from BASF Japan Ltd., N-C (alkyl group) type, the molecular weight of 737)

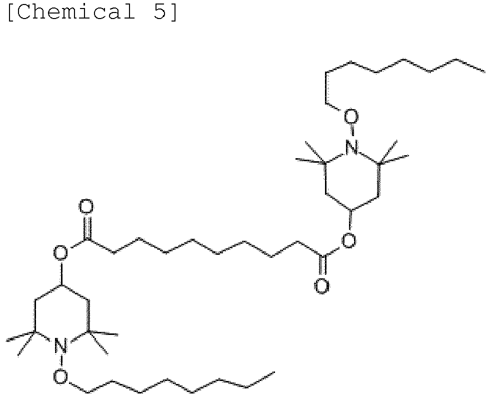

Tinuvin NOR371 (available from BASF Japan Ltd., N-OR (alkoxy group) type, the molecular weight of 1000 or more)

Tinuvin XT850FF (available from BASF Japan Ltd., N-OR (alkoxy group) type, the molecular weight of 500 or more and 4000 or less)

(A substitute compound/a compound not corresponding to Compound Y; a compound not corresponding to a compound having a group in which a carbon atom, an oxygen atom, or a hydrogen atom is bonded to a nitrogen atom and having a piperidine structure or being a hindered amine light stabilizer)

Tinuvin 326 (available from BASF Japan Ltd., 2-(5-chloro-2-benzotriazolyl)-6-tert-butyl-p-cresol)

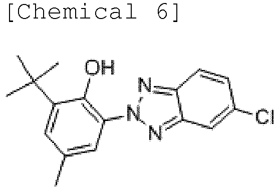

Other ingredients:
IRGANOX 1010 (available from BASF Japan Ltd.)
IRGANOX 1076 (available from BASF Japan Ltd.)
IRGANOX 245 (available from BASF Japan Ltd.)
ADK STAB AO-40 (available from ADEKA CORPORATION) (described as AO-40 in the table)
BHT (2,6-di-t-butyl-p-cresol)

A magnesium-containing mixture (magnesium acetate : magnesium 2-ethylbutyrate = 50% by weight : 50% by weight)

### (Example 1)

### (1) Preparation of composition for forming second layer

To 100 parts by weight of PVB1, 40 parts by weight of 3GO, Tinuvin 770DF in an amount that the proportion thereof in the resulting second layer becomes 0.0035% by weight, IRGANOX 1010 in an amount that the proportion thereof in the resulting second layer becomes 0.08% by weight, and a magnesium-containing mixture in an amount that the content of magnesium in the resulting second layer becomes 60 ppm were added and thoroughly kneaded with a mixing roll to obtain a composition for forming a second layer.

The composition obtained was extruded by an extruder to obtain a single-layered second layer with a thickness of 380 µm.

### (2) Preparation of composition for forming third layer

To 100 parts by weight of PVB1, 40 parts by weight of 3GO, a magnesium-containing mixture in an amount that the content of magnesium in the resulting third layer becomes 60 ppm, and 0.08 parts by weight of IRGANOX 1010 were added and thoroughly kneaded with a mixing roll to obtain a composition for forming a third layer.

The composition obtained was extruded by an extruder to obtain a single-layered third layer with a thickness of 380 µm.

### (3) Preparation of interlayer film

A film of XIR was used as a first layer and the first layer was sandwiched between the obtained second layer and the obtained third layer to obtain an interlayer film. In this connection, on this occasion, the first layer was sandwiched so that the metal foil of XIR was positioned closer to the second layer than to the third layer.

### (4) Preparation of laminated glass

The obtained interlayer film was cut into a size of 30 cm in longitudinal length × 30 cm in transversal length. Moreover, two sheets of green glass (30 cm in longitudinal length × 30 cm in transversal length × 2 mm in thickness) in accordance with JIS R3208 were prepared. The obtained interlayer film was sandwiched between the two sheets of green glass and held in place and pressed under vacuum for 30 minutes at 90°C with a vacuum laminator to obtain a laminate. With regard to the laminate, interlayer film portions protruded from the glass plate were cut away to obtain a sheet of laminated glass.

### (Examples 2 to 19 and Comparative Examples 1, 2)

An interlayer film and a sheet of laminated glass were obtained in the same manner as that in Example 1 except that the kind and content of each ingredient contained in the second layer and the third layer were changed to those listed in the following Tables 1 to 2.

In this connection, the amount of ion-exchanged water in a washing process for the PVB1 and the number of times of washing were adjusted to change the removal ratio of the chlorine atom left behind after the synthesis of the PVB1, and thus, the content of the chlorine atom contained in the second layer was regulated.

In this connection, in all of Examples 2 to 19 and Comparative Examples 1, 2, for each of the second layer and the third layer, a magnesium-containing mixture of the same composition as that in Example 1 was blended in the same amount as that (the amount relative to the polyvinyl acetal resin) in Example 1. In Tables 1 to 2, the description of the magnesium concentration was omitted.

### (Example 20)

An interlayer film was obtained in the same manner as that in Example 1 except that the thickness of a second layer was changed to 760 µm.

### (Examples 21 to 28)

An interlayer film and a sheet of laminated glass were obtained in the same manner as that in Example 1 except that the kind and content of each ingredient contained in the second layer and the third layer and the thickness of the second layer were changed to those listed in the following Table 3. In this connection, the amount of ion-exchanged water in a washing process for the PVB1 and the number of times of washing were adjusted to change the removal ratio of the chlorine atom left behind after the synthesis of the PVB1, and thus, the content of the chlorine atom contained in the second layer was regulated. In this connection, in all of Examples 21 to 28, for each of the second layer and the third layer, a magnesium-containing mixture of the same composition as that in Example 1 was blended in the same amount as that (the amount relative to the polyvinyl acetal resin) in Example 1. In Table 3, the description of the magnesium concentration was omitted.

### (Evaluation)

### (1) Measurement of visible light transmittance (A light Y value, A-Y (380 to 780 nm))

With the use of a spectrophotometer ("U-4100" available from Hitachi High-Technologies Corporation), the sheet of laminated glass obtained was measured for the visible light transmittance in the wavelength of 380 to 780 nm in accordance with JIS R3211 (1988). In this connection, it is preferred that the visible light transmittance be 60% or more. The visible light transmittance was judged according to the following criteria.

### [Criteria for judgment in visible light transmittance]

○: The visible light transmittance is 60% or more.
×: The visible light transmittance is less than 60%.

### (2) Poor appearance (white cloudiness)

The sheet of laminated glass obtained was stored for 4 days under the condition of 80°C and a humidity of 90%. After the storage, the sheet of laminated glass was evaluated whether or not white cloudiness by aggregation was generated at the peripheral edge part thereof. The white cloudiness was judged according to the following criteria. A square grid of 1 mm × 1 mm in which 50% or more of the area thereof becomes white and cloudy was defined as a white cloudiness grid in which white cloudiness is generated.

### [Criteria for judgment in poor appearance (white cloudiness)]

○: No white cloudiness is generated, or white cloudiness is generated, and the largest length of a white cloudiness portion composed of white cloudiness grids is less than 0.3 cm.
Δ: White cloudiness is generated, and the largest length of a white cloudiness portion composed of white cloudiness grids is 0.3 cm or more and less than 0.5 cm.
×: White cloudiness is generated, and the largest length of a white cloudiness portion composed of white cloudiness grids is 0.5 cm or more.

### (3) Measurement of content of chlorine atom

With the use of an automatic combustion halogen/sulfur analyzing system ("SQ-1 type/HSU-35 type" available from ANATEC YANACO CORPORATION, "ICS-2000 type" available from Thermo Fisher Scientific K.K.), the content of the chlorine atom was measured.

The details and the results are shown in the following Tables 1 to 3.

**[Table 1]**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Second layer | Polyvinyl acetal resin | Kind | PVB1 | PVB1 | PVB1 | PVB1 | PVB1 | PVB1 | PVB1 | PVB1 | PVB1 | PVB1 | PVB |
| | | Parts by weight | 100 | 100 | 100 | 100 | 100 | 100 | 100 | 100 | 100 | 100 | 100 |
| | Plasticizer | Kind | 3GO | 3GO | 3GO | 3GO | 3GO | 3GO | 3GO | 3GO | 3GO | 3GO | 3GO |
| | | Parts by weight | 40 | 40 | 40 | 40 | 40 | 40 | 40 | 40 | 40 | 40 | 40 |
| | Oxidation inhibitor | Kind | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 |
| | | % by weight | 0.08 | 0.08 | 0.08 | 0.08 | 0.08 | 0.08 | 0.08 | 0.08 | 0.08 | 0.08 | 0.08 |
| | Compound Y or substitute compound | Kind | Tinuvin 770DF | Tinuvin 770DF | Tinuvin 765 | Tinuvin 765 | Tinuvin 765 | Tinuvin 144 | Tinuvin 123 | Tinuvin 123 | Tinuvin NOR371 | Tinuvin XT850FF | Tinuvin 765 |
| | | % by weight | 0.0035 | 0.5 | 0.0035 | 0.0035 | 0.5 | 0.5 | 0.0035 | 0.5 | 0.0035 | 0.0035 | 0.0035 |
| | Content of chlorine atom | ppm | 15 | 15 | 15 | 10 or less | 15 | 15 | 15 | 15 | 15 | 15 | 50 |
| | Thickness | µm | 380 | 380 | 380 | 380 | 380 | 380 | 380 | 380 | 380 | 380 | 380 |
| First layer | | | XIR | XIR | XIR | XIR | XIR | XIR | XIR | XIR | XIR | XIR | XIR |
| Third layer | Polyvinyl acetal resin | Kind | PVB1 | PVB1 | PVB1 | PVB1 | PVB1 | PVB1 | PVB1 | PVB1 | PVB1 | PVB1 | PVB |
| | | Parts by weight | 100 | 100 | 100 | 100 | 100 | 100 | 100 | 100 | 100 | 100 | 100 |
| | Plasticizer | Kind | 3GO | 3GO | 3GO | 3GO | 3GO | 3GO | 3GO | 3GO | 3GO | 3GO | 3GO |
| | | Parts by weight | 40 | 40 | 40 | 40 | 40 | 40 | 40 | 40 | 40 | 40 | 40 |
| | Oxidation inhibitor | Kind | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 | IRGANOX 1010 |
| | | % by weight | 0.08 | 0.08 | 0.08 | 0.08 | 0.08 | 0.08 | 0.08 | 0.08 | 0.08 | 0.08 | 0.08 |
| Evaluation | Visible light transmittance | | ○ | ○ | ○ | ○ | ○ | ○ | ○ | ○ | ○ | ○ | ○ |
| | Poor appearance (white cloudiness) | | ○ | ○ | ○ | ○ | ○ | ○ | ○ | ○ | ○ | ○ | Δ |

**[Table 2]**

| | | | Example 12 | Example 13 | Example 14 | Example 15 | Example 16 | Example 17 | Example 18 | Example 19 | Example 20 | Comparative Example 1 | Comparative Example 2 |
|---|---|---|---|---|---|---|---|---|---|---|---|---|---|
| Second layer | Polyvinyl acetal resin | Kind | PVB1 | PVB1 | PVB1 | PVB1 | PVB1 | PVB1 | PVB1 | PVB1 | PVB1 | PVB1 | PVB1 |
| | | Parts by weight | 100 | 100 | 100 | 100 | 100 | 100 | 100 | 100 | 100 | 100 | 100 |
| | Plasticizer | Kind | 3GO | 3GO | 3GO | 3GO | 3GO | 3GO | 3GO | 3GO | 3GO | 3GO | 3GO |
| | | Parts by weight | 40 | 40 | 40 | 40 | 40 | 40 | 40 | 40 | 40 | 40 | 40 |
| | Oxidation inhibitor | Kind | IRGANOX 1010 | IRGANOX 1010 | IRGANOX 1010 | IRGANOX 1076 | IRGANOX 245 | IRGANOX 245 | AO-40 | AO-40 | IRGANOX 1010 | BHT | BHT |
| | | % by weight | 0.08 | 0.4 | 0.035 | 0.08 | 0.035 | 0.4 | 0.035 | 0.4 | 0.08 | 0.15 | 0.15 |
| | Compound Y or substitute compound | Kind | Tinuvin 765 | Tinuvin 765 | Tinuvin 765 | Tinuvin 765 | Tinuvin 765 | Tinuvin 765 | Tinuvin 765 | Tinuvin 765 | Tinuvin 765 | - | Tinuvin 326 |
| | | % by weight | 0.0035 | 0.0035 | 0.0035 | 0.0035 | 0.0035 | 0.0035 | 0.0035 | 0.0035 | 0.0035 | - | 0.15 |
| | Content of chlorine atom | ppm | 30 | 15 | 15 | 15 | 15 | 15 | 15 | 15 | 15 | 15 | 15 |
| | Thickness | µm | 380 | 380 | 380 | 380 | 380 | 380 | 380 | 380 | 760 | | |
| First layer | | | XIR | XIR | XIR | XIR | XIR | XIR | XIR | XIR | XIR | XIR | XIR |
| Third layer | Polyvinyl acetal resin | Kind | PVB1 | PVB1 | PVB1 | PVB1 | PVB1 | PVB1 | PVB1 | PVB1 | PVB1 | PVB1 | PVB1 |
| | | Parts by weight | 100 | 100 | 100 | 100 | 100 | 100 | 100 | 100 | 100 | 100 | 100 |
| | Plasticizer | Kind | 3GO | 3GO | 3GO | 3GO | 3GO | 3GO | 3GO | 3GO | 3GO | 3GO | 3GO |
| | | Parts by weight | 40 | 40 | 40 | 40 | 40 | 40 | 40 | 40 | 40 | 40 | 40 |
| | Oxidation inhibitor | Kind | IRGANOX 1010 | IRGANOX 1010 | IRGANOX 1010 | IRGANOX 1076 | IRGANOX 245 | IRGANOX 245 | AO-40 | AO-40 | IRGANOX 1010 | BHT | BHT |
| | | % by weight | 0.08 | 0.4 | 0.035 | 0.08 | 0.035 | 0.4 | 0.035 | 0.4 | 0.08 | 0.15 | 0.15 |
| Evaluation | Visible light transmittance | | ○ | ○ | ○ | ○ | ○ | ○ | ○ | ○ | ○ | ○ | ○ |
| | Poor appearance (white cloudiness) | | Δ | ○ | ○ | ○ | ○ | ○ | ○ | ○ | ○ | × | × |

**[Table 3]**

| | | | Example 21 | Example 22 | Example 23 | Example 24 | Example 25 | Example 26 | Example 27 | Example 28 |
|---|---|---|---|---|---|---|---|---|---|---|
| Second layer | Polyvinyl acetal resin | Kind | PVB1 | PVB1 | PVB1 | PVB1 | PVB1 | PVB1 | PVB1 | PVB1 |
| | | Parts by weight | 100 | 100 | 100 | 100 | 100 | 100 | 100 | 100 |
| | Plasticizer | Kind | 3GO | 3GO | 3GO | 3GO | 3GO | 3GO | 3GO | 3GO |
| | | Parts by weight | 40 | 40 | 40 | 40 | 40 | 40 | 40 | 40 |
| | Oxidation inhibitor | Kind | IRGANOX1010 | IRGANOX1010 | BHT | BHT | BHT | BHT | BHT | IRGANOX1010 |
| | | % by weight | 0.08 | 0.08 | 0.15 | 0.15 | 0.15 | 0.15 | 0.15 | 0.15 |
| | Compound Y or substitute compound | Kind | Tinuvin765 | Tinuvin765 | Tinuvin765 | Tinuvin765 | Tinuvin765 | Tinuvin765 | Tinuvin123 | Tinuvin765 |
| | | % by weight | 0.015 | 0.015 | 0.015 | 0.015 | 0.015 | 0.015 | 0.015 | 0.015 |
| | Content of chlorine atom | ppm | 15 | 30 | 15 | 15 | 15 | 15 | 15 | 15 |
| | Thickness | µm | 380 | 380 | 380 | 150 | 760 | 1000 | 760 | 150 |
| First layer | | | XIR | XIR | XIR | XIR | XIR | XIR | XIR | XIR |
| Third layer | Polyvinyl acetal resin | Kind | PVB1 | PVB1 | PVB1 | PVB1 | PVB1 | PVB1 | PVB1 | PVB1 |
| | | Parts by weight | 100 | 100 | 100 | 100 | 100 | 100 | 100 | 100 |
| | Plasticizer | Kind | 3GO | 3GO | 3GO | 3GO | 3GO | 3GO | 3GO | 3GO |
| | | Parts by weight | 40 | 40 | 40 | 40 | 40 | 40 | 40 | 40 |
| | Oxidation inhibitor | Kind | IRGANOX1010 | IRGANOX1010 | BHT | BHT | BHT | BHT | BHT | BHT |
| | | % by weight | 0.08 | 0.08 | 0.15 | 0.15 | 0.15 | 0.15 | 0.15 | 0.15 |
| Evaluation | Visible light transmittance | | ○ | ○ | ○ | ○ | ○ | ○ | ○ | ○ |
| | Poor appearance (white cloudiness) | | ○ | ○ | ○ | ○ | ○ | ○ | ○ | ○ |

### EXPLANATION OF SYMBOLS

- 1:: Interlayer film
- 1a:: First surface
- 1b:: Second surface
- 11:: First layer
- 11a:: First surface
- 11b:: Second surface
- 12:: Second layer
- 12a:: Outer surface
- 13:: Third layer
- 13a:: Outer surface
- 21:: Laminated glass
- 31:: First lamination glass member
- 32:: Second lamination glass member

## Claims

1. An interlayer film for laminated glass, comprising:
a first layer containing silver; and
a second layer containing a polyvinyl acetal resin,
the second layer being arranged on a first surface side of the first layer,
the second layer containing a compound having a group in which a carbon atom, an oxygen atom, or a hydrogen atom is bonded to a nitrogen atom, and
the compound having a group in which a carbon atom, an oxygen atom, or a hydrogen atom is bonded to a nitrogen atom being a compound having a piperidine structure or being a hindered amine light stabilizer.

2. The interlayer film for laminated glass according to claim 1, wherein the second layer contains an ultraviolet ray screening agent,
the ultraviolet ray screening agent in the second layer contains no chlorine atom or contains a chlorine atom,
when the ultraviolet ray screening agent in the second layer contains no chlorine atom, the second layer contains no chlorine atom or contains a chlorine atom in a content of 30 ppm or less, and
when the ultraviolet ray screening agent in the second layer contains a chlorine atom, the second layer contains no chlorine atom other than the chlorine atom in the ultraviolet ray screening agent or contains 30 ppm or less of chlorine atom(s) other than the chlorine atom in the ultraviolet ray screening agent.

3. The interlayer film for laminated glass according to claim 1 or 2, wherein the first layer is provided with a layer body and a film containing silver and the film containing silver is arranged on a first surface side of the layer body.

4. The interlayer film for laminated glass according to claim 3, wherein the film containing silver is arranged on the first surface side of the first layer.

5. The interlayer film for laminated glass according to claim 3 or 4, wherein no film containing silver is arranged on a second surface side opposite to the first surface of the layer body.

6. The interlayer film for laminated glass according to any one of claims 1 to 5, further comprising:
a third layer containing a polyvinyl acetal resin,
the third layer being arranged on a second surface side opposite to the first surface of the first layer.

7. The interlayer film for laminated glass according to claim 6, wherein the second layer contains a plasticizer and the third layer contains a plasticizer.

8. The interlayer film for laminated glass according to any one of claims 1 to 7, wherein, when the interlayer film is sandwiched between two sheets of green glass with a thickness of 2 mm in accordance with JIS R3208 to obtain laminated glass, the visible light transmittance of the laminated glass is 60% or more.

9. Laminated glass, comprising:
a first lamination glass member;
a second lamination glass member; and
the interlayer film for laminated glass according to any one of claims 1 to 8,
the interlayer film for laminated glass being arranged between the first lamination glass member and the second lamination glass member.

10. The laminated glass according to claim 9, wherein the visible light transmittance is 60% or more.
